(19) Europäisches Patentamt
European Patent Office
Office européen des brevets

(11) **EP 0 439 010 B1**

(12) **EUROPEAN PATENT SPECIFICATION**

(45) Date of publication and mention
of the grant of the patent:
**24.09.1997 Bulletin 1997/39**

(51) Int. Cl.⁶: **B01D 53/94**, B01D 53/86,
C10L 1/12

(21) Application number: **91100106.3**

(22) Date of filing: **02.01.1991**

(54) **Cleaning of exhaust gas containing silicon compounds and/or phosphorus compounds**

Behandlung von Abgasen, die Silikon- und/oder Phosphorverbindungen enthalten

Traitement des effluents gazeux contenant des composés de la silicone et/ou des composés du phosphore

(84) Designated Contracting States:
**DE FR GB IT**

(30) Priority: **12.01.1990 JP 5672/90**
**06.08.1990 JP 208373/90**

(43) Date of publication of application:
**31.07.1991 Bulletin 1991/31**

(60) Divisional application: **94102489.5**
**95104503.8**

(73) Proprietor: **NGK SPARK PLUG CO., LTD**
**Mizuho-ku Nagoya-shi Aichi (JP)**

(72) Inventors:
• **Kojima, Takao,**
**c/o NGK Spark Plug Co., Ltd.**
**Nagoya-shi, Aichi (JP)**
• **Minoha, Ken,**
**c/o NGK Spark Plug Co., Ltd.**
**Nagoya-shi, Aichi (JP)**
• **Yamano, Masaru,**
**c/o NGK Spark Plug Co., Ltd.**
**Nagoya-shi, Aichi (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
EP-A- 0 013 243          EP-A- 0 161 743
EP-A- 0 342 588          DE-B- 2 045 488
GB-A- 2 142 253          US-A- 3 409 390
US-A- 4 040 797          US-A- 4 080 179

Remarks:
Divisional application 94102489.5 filed on 02/01/91.

## Description

Automotive exhaust gas catalytic converters are commonly used in automobiles to prevent environmental pollution because the catalytic converters greatly reduce air pollutants such as e.g. carbon monoxide or nitrogen oxides without lowering the output and fuel efficiency of the engines.

With recent improvements in the combustion systems in engines, the concentrations of unburned ingredients in exhaust gases have become low. As a result, catalytic converters are now mainly employed. Catalysts for use in these catalytic converters include an oxidation catalyst, a reduction catalyst, and a three-way catalyst, each consisting of a ceramic support of the pellet or monolith-type and a particular catalytic component deposited on the support. Such catalytic components include, for example, noble metals such as Pt or Rh.

Catalytic converters are also used in industrial engines (e.g., engines for use with digestion gases formed by the digestion of organic sludges such as sewage sludges).

However, the known catalytic converters have the following problem. Silicon (including various Si-containing compounds), for example, siloxane gas ($Si(CH_3)_nO$ or $(CH_3)_2SiO$) and phosphorus, for example, phosphoric acid and phosphate (such as $H_3PO_4$, $HPO_3$ and $H_4P_2O_7$) are often present in exhaust gases, mainly because silicones or the like are used in large quantities as sealing materials, i.e., formed in-place gasket (FIPG) for present-day automotive parts and phosphorus is contained in oils. Further, sand and dust, dispersed in the air, may come into the intake air and be introduced into the engine. In the case of engines used with digestion gases, there are also situations where Si and/or P enter into the fuel. Because of Si and/or P, the noble metals, such as Pt and Rh, used as catalytic components are likely to be poisoned or clogged. This poisoning or clogging greatly impairs the catalyst function.

US-A-3,409,390 discloses a method for treating exhaust gases, said method using a catalytic composite consisting essentially of alumina, a platinum group metal component and an alkaline earth component.

GB-A-2142253 discloses a process for preparing a lead tolerant catalyst comprising alumina, barium oxide and a platinum group moiety.

EP-A-0161743 discloses a catalyst composition having an upstream section and a downstream section, the upstream section comprising a phosphorus retaining material (e.g. alumina) and the downstream section comprising a vanadium oxide containing catalyst.

EP-A-0342588 discloses a process for cleaning exhaust gases from hydrogen fluoride and/or hydrogen chloride using a device comprising a honeycombed support containing a calcium compound, said calcium compound reacting with the hydrogen fluoride and/or hydrogen chloride of the exhaust gases via a contact reaction to form calcium fluoride and/or calcium chloride.

The object of the present invention is to provide a novel use for an exhaust gas converter device.

This object has been solved by the use of an exhaust gas converter device for cleaning silicon and/or phosphorus containing exhaust gas, said exhaust gas converter device comprising a poisoning-preventive material for preventing a catalyst from being poisoned by silicon and/or phosphorus provided on the exhaust gas inlet side and a catalytic composite comprising a support and a noble metal catalytic component deposited on said support provided on the exhaust gas outlet side, said poisoning-preventive material being either a ceramic material or a material for preventing a catalyst from being poisoned, said material comprising a support and a poisoning-preventive layer formed thereon, said layer comprising a Group IIa element compound, said ceramic material comprising a compound containing at least one element selected from the Group IIa elements of the periodic table or comprising said compound and other ceramic compounds.

It is preferred that the content of the Group IIa element in the ceramic material is at least 5 wt%.

It is more preferred that the content of the Group IIa element in the ceramic material is at least 20 wt%.

It is preferred that the poisoning-preventive layer is formed on the support in an amount of from 5 to 200 g/l of the support.

It is more preferred that the poisoning-preventive layer is formed on the support in an amount of from 30 to 150 g/l of the support.

It is preferred that the amount of the Group IIa element compound in the poisoning-preventive layer is at least 5 wt%.

It is more preferred that the amount of the Group IIa element compound in the poisoning-preventive layer is at least 10 wt%.

It is preferred that the poisoning-resistant part extends from the exhaust gas inlet side edge over at least 1/10th of the entire length of the exhaust gas converter device.

It is more preferred that the poisoning-resistant part extends from the exhaust gas inlet side edge over at least 1/5th of the entire length of the exhaust gas converter device.

Fig. 1 is a diagrammatic view illustrating an installed converter device as one form of the converter device used according to this invention.

Fig. 2 is a perspective view of a cylindrical ceramic heater.

The poisoning-preventive material may have a shape and a support material, such as those described below, and employs a Group IIa element compound such as those described below. For example, the support may consist of dolomite ($CaCO_3 \cdot MgCO_3$) alone, or may have a honeycomb structure consisting of cordierite covered with the Group IIa element compound, for example, dolomite. The Group IIa element compound may be deposited on the support, for example, by impregnating the support with an aqueous solution of the compound, or by applying a paste of the compound to the support by immersing the support in the paste.

The amount of the poisoning-preventive layer formed on the support is preferably from 5 to 200 g, more preferably from 30 to 150 g, per liter of the support. If the amount of the layer is less than 5 g, the effect of the Group IIa element compound is insufficient. If the amount of the Group IIa element compound exceeds 200 g, the poisoning-preventive layer becomes too thick, resulting in peeling of the layer. The amount of Group IIa element compound in the poisoning-preventive layer is generally 5% or more, preferably 10% or more, in terms of the amount of the Group IIa element based on the amount of the other metal oxides. If the amount of the Group IIa element compound is less than 5%, a sufficient effect cannot be obtained. In any case, the support should be able to endure thermal shock etc., and it is preferable to make the surface area of the support as large as possible for sufficient contact with exhaust gases.

The support may be in the form of pellets or in a monolith form, and it may be made of a ceramic or a metal, or may consist of a material coated with a protective layer of e.g. $\gamma$-alumina.

Use of the "compound containing at least one element selected from the Group IIa elements" (hereinafter "Group IIa element compound") is essential in the present invention, because the Si and/or P contained in exhaust gases react with the Group IIa elements at temperatures at which the noble metal in the catalyst is used, to form low-melting-point crystals. This prevents penetration of Si and/or P into the noble metal. Thus, the poisoning of the noble metal can be prevented. The Group IIa element compound preferably is a non-oxide, because a non-oxide Group IIa element compound shows excellent poisoning-preventive performance even if it is not heated.

The Group IIa element compound refers to a compound containing one or more elements selected from Mg, Ca, Sr, and the other Group IIa elements which further may contain, for example, $TiO_2$, $Al_2O_3$, in addition to the above compound. It is, however, preferable that the Group IIa element be contained in the poisoning-preventive layer in an amount of 5% by weight or more based on the amount of the ceramics or metals such as $TiO_2$. (Hereinafter, all percents are by weight.) If the content of the Group IIa element is less than 5%, the effect of preventing the poisoning by Si and/or P is reduced.

As the Group IIa element to be used in the present invention, Ca or Mg may preferably be employed. This is because these two elements are superior with respect to preventing poisoning by Si and/or P. Preferred examples of compounds of Ca and Mg include non-oxides such as chlorides, e.g., calcium chloride, nitrates, acetates and carbonates. Of these, chlorides and nitrates are particularly preferred because they show excellent reactivity with Si and/or P at low temperatures. Preferred examples of the Group IIa element compound further include hydrates of the above non-oxides, e.g., $CaCl_2 \cdot 2H_2O$, and complex compounds, e.g., $CaCO_3 \cdot MgCO_3$ (dolomite). Use of these non-oxides, such as chlorides, nitrates or carbonates, containing e.g. Ca or Mg, is effective in that since these compounds can be in the form of very fine particles, they can not only prevent Si and/or P from passing through the Group IIa elements, but they also exhibit higher activity against Si and/or P.

On the other hand, oxides such as CaO or MgO can react sufficiently with Si and/or P to prevent the poisoning of the noble metal catalyst component, only if the catalyst temperature is 500°C or higher. Therefore, use of such an oxide is inferior because Si and/or P adhere to the catalyst surfaces at catalyst temperatures less than 500°C and, as the catalyst temperature rises above 500°C, part of the Si and/or P are changed into oxides to cause clogging. Thus, catalytic performance may be decreased.

Therefore, in the case where such an oxide is used as the poisoning-preventive layer employed in the poisoning-preventive material described above, a means for heating this poisoning-preventive layer may be provided. This heating means is not particularly limited in kind or location as long as it can heat the poisoning-preventive layer. For example, a support having a built-in heating element, such as a heating wire, may be used as the support, or a plate heater or other heater may be placed over the poisoning-preventive layer. Further, in the case of a metallic support, it can be made to generate heat by applying electric current to the support.

The ceramic material may consist of the above-described Group IIa element compound only, or consist of a combination of the Group IIa element compound with e.g. $TiO_2$ or $Al_2O_3$. It is, however, preferable that the content of the Group IIa element in this ceramic material be 5% or higher, particularly 20% or higher, to ensure the prevention of poisoning by Si and/or P. The poisoning-preventive layer containing the Group IIa element compound may be coated on a support such as, for example, cordierite. In this case, the amount of the poisoning-preventive layer formed on the support is preferably from 5 to 200 g per liter of the support. If the amount of the layer is less than 5 g, the property of preventing poisoning by Si and/or P is impaired. Amounts of the layer exceeding 200 g are not preferred in that clogging or peeling may result. The content of the Group IIa element in the poisoning-preventive layer of the poisoning-preventive material employed in the converter device used in the present invention is preferably 5% or more based on the amount of the ceramic.

The ceramic support that can be used in the poisoning-preventive material in the converter device may be either pellet type or monolith-type. On the exhaust gas outlet side, a conventional catalyst which does not have poisoning resistance may be provided.

In the present invention, the converter device, the poisoning-resistant part, preferably extends from the exhaust gas inlet side edge over a length of 1/10th or more, particularly 1/5th or more, of the whole length of the converter device, for the same reason as described above. The support used in this case may be ceramic or metallic.

By use of the exhaust gas converter device employing the catalyst and a poisoning-preventive material according to the present invention, the Si and/or P contained in the exhaust gas are caught by the Group IIa element compound before they reach the noble metal catalytic component, so that the catalytic component is less apt to be poisoned or clogged by silicon or phosphorus. Therefore, according to the present invention, even if a conventional catalyst is used repeatedly, the performance, i.e., exhaust gas catalytic activity performance, of the catalyst can be maintained and prevented from being greatly decreased over a prolonged period of time.

In the case of using a metallic support, the support shown excellent durability with little cracking, breakage, etc. because the support is metallic.

In the case where the poisoning-preventive material is provided on the upstream in the converter device and a catalyst is provided on the downstream, the initial converting efficiency of the catalyst is not adversely affected and the catalyst exhibits excellent catalytic activity performance.

In the case of using a poisoning-preventive material provided with a heating means, the poisoning-preventive layer shows good performance even if it employs an oxide, such as CaO, as the Group IIa element compound.

The support, which may be of the pellet or monolith-type, is not particularly limited in e.g. shape, material or size, and porosity in the case of a ceramic support. For example, the support may be in the form of cylindrical pellets as well as spherical pellets, or may be in the form of a square pillar-shaped monolith as well as in a cylindrical monolith. These monolith-type supports may have a so-called honeycomb structure and one end of such a support may be covered or not covered. The one-end-covered support may be constructed so that exhaust gases can pass through the wall thereof. The material of the support may be either ceramic or metallic, and can be selected from a variety of ceramic and metallic supports according to use and application.

Furthermore, the heat treatment conditions (e.g. heating temperature, heating time, atmosphere) for forming a layer of a Group IIa element compound are selected in various ways according to the kind of the compound and other factors. In the case of heat treatment in a nitrogen atmosphere, a nitride may be formed in a slight amount according to the kind of the Group IIa element compound used. In the case of an oxidizing atmosphere, an oxide may be formed likewise. Moreover, the poisoning-preventive material may have a structure comprising a honeycomb support having a built-in heating element (heating wire etc.) and a poisoning-preventive layer formed on the support. Alternatively, the poisoning-preventive material may be combined with a plate heater placed over or under the poisoning-preventive layer.

The present invention is explained below in more detail by reference to the following Examples.

EXAMPLE 1

This example is concerned with the preparation and evaluation of poisoning-preventive materials.

Preparation of poisoning-preventive materials and converter devices:

Each of the supports having shapes and sizes as shown in Tables 1(A) and 1(B) and made of materials as shown in the tables was immersed in a paste consisting of a predetermined concentration of a Group IIa element compound, a ceramic powder, both shown in the table, and BMS (butyral resin) as an organic binder. The support was then taken out from the paste, and air was blown at the support to form a uniform coating film. The viscosity of each paste used above was regulated at 100 mPa·s (100 cps) or less. Thereafter, the coated support was dried sufficiently at 100°C, and then heat-treated in the air at 500 to 600°C, thereby preparing a poisoning-preventive material.

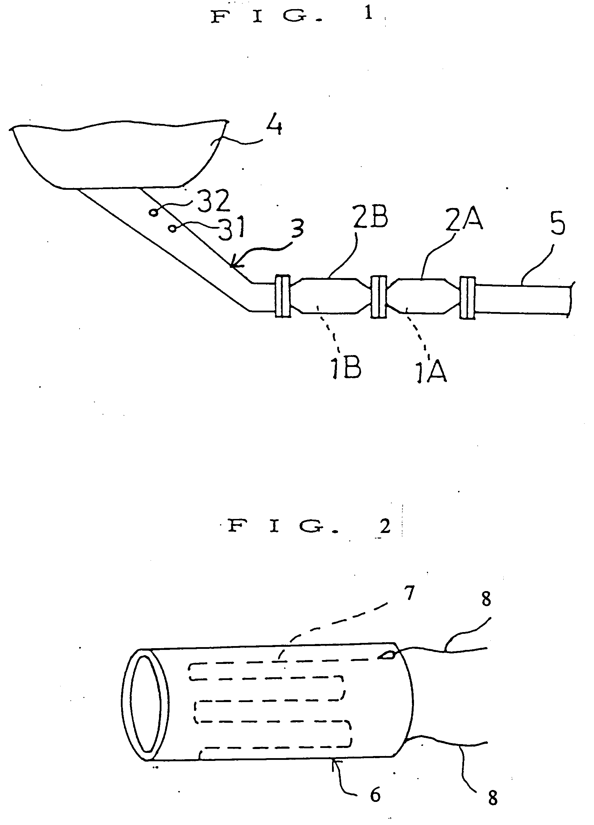

With respect to poisoning-preventive materials Nos. 14 and 15, a ceramic heater was used to heat the poisoning-preventive layers at 500 to 600°C. As shown in Fig. 2, this ceramic heater 6 is a cylindrical tube (inner diameter 100 mm$\phi$, length 200 mm) having a heating Pt electrode (heating element) 7 which is a built-in zigzag electrode and also having lead wires 8, 8. In the case where the above-described materials were prepared from pelleted supports, the cylindrical heater was packed with a plurality of pellets, with both openings of the cylinder being covered with a honeycomb lid made of cordierite. Subsequently, a CA wire (K thermocouple, 0.6 mm$\phi$) was inserted into the pellets in the cylinder, and the applied voltage was regulated so that the pellets were heated at 400 ± 20°C before the test. During the test of the pellets, their temperature rises to 500 to 600°C.

Each of the thusly obtained poisoning-preventive materials 1B was wrapped in a mat made of ceramic and placed in a predetermined shell 2B, which was then installed on the exhaust gas inlet side of a converter device as shown in Fig. 1. On the downstream side of the poisoning-preventive material-containing shell, a conventional catalyst 1A placed in a predetermined shell 2A was installed, the catalyst consisting of a monolith-type (honeycomb) activated alumina support and Pt (0.13%) and Rh (0.014%) deposited as catalytic components on the support. Each of the prepared converter devices was subjected to the following Si poisoning test.

Performance Test:

Each of the converter devices was installed as shown in Fig. 1.

Thereafter, the engine was operated at 3,000 rpm and a silicone oil was injected from a silicone injection hole 31 in the wall of an exhaust pipe 3 for 1 hour at a rate of 20 cm$^3$/hr. This exhaust pipe 3 was provided therein with an oxygen sensor at an oxygen sensor-inserting hole 32 and the oxygen concentration was determined by this sensor, so that the air-fuel ratio was maintained around the theoretical value (14.7:1). In Fig. 1, numeral 4 denotes an exhaust manifold and 5 a main muffler.

Thereafter, the resulting conventional catalysts were taken out from the converter devices and installed in a vehicle for catalyst evaluation, and the degree of poisoning of each catalyst was evaluated in terms of converting efficiency. The results obtained are summarized in Tables 1(A) and 1(B), in which "Ca concentration (%)" means the weight of Ca per weight of the other metal oxides.

The converting efficiency was calculated using the following equation after the CO or NOx concentration $A_1$ of the exhaust gas before passing through the catalyst and the CO or NOx concentration $A_2$ of the exhaust gas after passing through the catalyst were determined.

$$\text{Converting efficiency} = [(A_1 - A_2)/A_1] \times 100 \ (\%)$$

## Table 1 (A)

| No. | Support | | | Poisoning-Preventive Layer | | | Converting Efficiency | | Heater |
|---|---|---|---|---|---|---|---|---|---|
| | Kind | Material | Outer Diameter (mmφ) | Group IIa Element Compound | Ceramic | Concentration (%) | CO (%) | NOx (%) | |
| 1 | Pellet | Activated alumina | 2 | $CaCl_2 \cdot 2H_2O$ | γ-alumina | 5 | 82 | 87 | None |
| 2 | " | " | 2 | " | " | 25 | 89 | >90 | " |
| 3 | " | " | 2 | $Ca(NO_3)_2 \cdot 4H_2O$ | " | 15 | 89 | >90 | " |
| 4 | " | " | 2 | " | $TiO_2$ | 15 | 88 | >90 | " |
| 5 | " | " | 2 | $MgCl_2 \cdot 6H_2O$ | γ-alumina | 20 | 87 | >90 | " |
| 6 | " | " | 3 | $CaCl_2 \cdot 2H_2O$ | " | 5 | 81 | 86 | " |
| 7 | " | " | 3 | " | " | 25 | 88 | >90 | " |
| 8 | " | " | 3 | $Ca(NO_3)_2 \cdot 4H_2O$ | " | 15 | 88 | >90 | " |
| 9 | " | " | 3 | dolomite | | – | 83 | 89 | " |
| 10 | " | " | 3 | $Ca(NO_3)_2 \cdot 4H_2O$ | $TiO_2$ | 5 | 82 | 86 | " |
| 11 | " | " | 3 | " | " | 25 | 89 | >90 | " |

EP 0 439 010 B1

EP 0 439 010 B1

Table 1 (A) (cont'd)

| No. | Support | | | Poisoning-Preventive Layer | | | Converting Efficiency | | Heater |
| | Kind | Material | Outer Diameter (mmφ) | Group IIa Element Compound | Ceramic | Concentration (%) | CO (%) | NOx (%) | |
|---|---|---|---|---|---|---|---|---|---|
| 12 | Pellet | Activated alumina | 3 | $MgCl_2 \cdot 6H_2O$ | γ-alumina | 10 | 86 | >90 | None |
| 13 | " | " | 3 | $Mg(NO_3)_2 \cdot 6H_2O$ | " | 15 | 85 | >90 | " |
| 14 | " | " | 3 | CaO | " | 10 | 87 | >90 | Present |
| 15 | " | " | 3 | " | " | 20 | 89 | >90 | " |
| Comparative 1 | " | " | 3 | " | " | 20 | 75 | 82 | None |
| 16 | " | " | 4 | $CaCl_2 \cdot 2H_2O$ | " | 5 | 79 | 84 | " |
| 17 | " | " | 4 | " | " | 15 | 85 | >90 | " |
| 18 | " | " | 5 | " | " | 5 | 77 | 83 | " |
| 19 | " | " | 5 | " | " | 25 | 82 | 87 | " |

Table 1.(B)

| No. | Support | | | Poisoning-Preventive Layer | | | Converting Efficiency | | Heater |
|---|---|---|---|---|---|---|---|---|---|
| | Kind | Material | Outer Diameter (mmφ) | Group IIa Element Compound | Ceramic | Concentration (%) | CO (%) | NOx (%) | |
| 20 | Pellet | Dolomite | 2 | Ca(NO$_3$)$_2$·4H$_2$O | γ-alumina | 15 | 89 | >90 | None |
| 21 | " | " | 2 | " | TiO$_2$ | 15 | 89 | >90 | " |
| 22 | " | " | 4 | " | γ-alumina | 15 | 87 | >90 | " |
| 23 | Honey-comb | Cordierite | 150 | CaCl$_2$·2H$_2$O | " | 5 | 80 | 87 | " |
| 24 | " | " | " | " | " | 25 | 86 | >90 | " |
| 25 | " | " | " | Ca(NO$_3$)$_2$·4H$_2$O | " | 15 | 87 | >90 | " |
| 26 | " | " | " | dolomite | | — | 84 | 89 | " |
| 27 | " | " | " | Ca(NO$_3$)$_2$·4H$_2$O | TiO$_2$ | 15 | 87 | >90 | " |
| 28 | " | " | " | MgCl$_2$·6H$_2$O | γ-alumina | 20 | 85 | >90 | " |
| 29 | " | Dolomite | " | dolomite | | — | 83 | 89 | " |
| 30 | " | " | " | Ca(NO$_3$)$_2$·4H$_2$O | γ-alumina | 15 | 89 | >90 | " |
| 31 | Pellet | " | 3 | CaCl$_2$ | | 10 | 85 | >90 | " |
| Comparative 2 | " | Alumina | 3 | | None | | 74 | 79 | " |
| Comparative 3 | Honey-comb | Cordierite | 150 | | None | | 73 | 79 | " |

In the tables, comparative materials Nos. 2 and 3 did not have a poisoning-preventive layer, while comparative material No. 2 did not employ such a support. Material No. 12 was not provided with a heating means.

The results show the following. The materials Nos. 1 to 31 were superior in the catalyst's converting efficiencies for both CO and NOx compared with the comparative materials (Nos. 1 to 3). Although the materials used in this invention showed slightly poor poisoning-preventive properties at a Ca concentration of 5 wt% (Nos. 1, 6, 10, 16, and 18), they showed especially good performance at Ca concentrations of 10 to 20%. The materials used in the present invention employing Group IIa element compounds other than CaO showed good performance even without a heating means. However, in the case of the materials employing CaO, poor converting efficiencies resulted when the material was not heated (comparative material No. 1), while good converting efficiencies were obtained when the materials were heated (materials Nos. 14 and 15). In the case of the pelleted supports, the poisoning-preventive effect was weakened as the pellet diameter increased from 2 mm$\phi$ to 5 mm$\phi$ and the space volume increased accordingly (as apparent, for example, from a comparison among Nos. 1 and 2, Nos. 6 and 7, and Nos. 18 and 19).

EXAMPLE 2

In this example, the property of preventing poisoning by phosphoric acid was examined. In place of the silicone oil used in the preceding Example, a 30% solution of phosphoric acid (reagent-grade ortho-phosphoric acid) was injected for 1 hour at a rate of 20 ml/hr into similar converter devices employing the materials shown in Table 2, in which the respective materials are the same as those described in Table 1. That is, materials Nos. 2, 11, 25, and 30, which were the same as those in Example 1, were used to prepare converter devices in the same manner as in Example 1. After completion of the injection of phosphoric acid, converting efficiency measurements were conducted likewise. The results obtained are shown in Table 2, in which comparative material No. 4 did not have a poisoning-preventive layer.

The results in Table 2 show that the materials used in the present invention (Nos. 2, 11, 25, and 30) showed good performance compared to comparative No. 4. This indicates that the poisoning-preventive material used in the present invention are excellent not only in the property of resisting or preventing the poisoning by Si, but also in the property of resisting or preventing poisoning by phosphorus compounds.

Table 2

| No. | Converting Efficiency | | |
|-----|--------|---------|-------------|
|     | CO (%) | NOx (%) |             |
| 2   | ≧90    | ≧90     | Invention   |
| 11  | ≧90    | ≧90     | "           |
| 25  | 89     | ≧90     | "           |
| 30  | 89     | ≧90     | "           |
| 4   | 74     | 84      | Comparative |

**Claims**

1. Use of an exhaust gas converter device for cleaning silicon and/or phosphorus containing exhaust gas, said exhaust gas converter device comprising a poisoning-preventive material for preventing a catalyst from being poisoned by silicon and/or phosphorus provided on the exhaust gas inlet side and a catalytic composite comprising a support and a noble metal catalytic component deposited on said support provided on the exhaust gas outlet side, said poisoning-preventive material being either a ceramic material or a material for preventing a catalyst from being poisoned, said material comprising a support and a poisoning-preventive layer formed thereon, said layer comprising a Group IIa element compound, said ceramic material comprising a compound containing at least one element selected from the Group IIa elements of the periodic table or comprising said compound and other ceramic compounds.

2. The use of claim 1, wherein the content of the Group IIa element in the ceramic material is at least 5 wt%.

3. The use of claim 2, wherein the content of the Group IIa element in the ceramic material is at least 20 wt%.

4. The use of claim 1, wherein the poisoning-preventive layer is formed on the support in an amount of from 5 to 200 g/l of the support.

5. The use of claim 4, wherein the poisoning-preventive layer is formed on the support in an amount of from 30 to 150 g/l of the support.

6. The use of claim 1, wherein the amount of the Group IIa element compound in the poisoning-preventive layer is at least 5 wt%.

7. The use of claim 6, wherein the amount of the Group IIa element compound in the poisoning-preventive layer is at least 10 wt%.

8. The use of claim 1, wherein the poisoning-resistant part extends from the exhaust gas inlet side edge over at least 1/10th of the entire length of the exhaust gas converter device.

9. The use of claim 8, wherein the poisoning-resistant part extends from the exhaust gas inlet side edge over at least 1/5th of the entire length of the exhaust gas converter device.

**Patentansprüche**

1. Verwendung einer Abgaskonvertervorrichtung zum Reinigen von Silicium und/oder Phosphor enthaltenden Abgas, wobei die Abgaskonvertervorrichtung ein an der Abgaseinlaßseite bereitgestelltes, Vergiftung verhinderndes Material, damit eine Vergiftung eines Katalysators durch Silicium und/oder Phosphor verhindert wird, und an der Abgasauslaßseite angeordnet einen katalytischen Verbundwerkstoff, umfassend einen Träger und eine auf dem Träger abgeschiedene katalytische Edelmetallkomponente, umfaßt, wobei das Vergiftung verhindernde Material entweder ein keramischer Werkstoff oder ein Vergiftung eines Katalysators verhinderndes Material ist, das Material einen Träger und darauf gebildet eine Vergiftung verhindernde Schicht umfaßt, die Schicht eine Verbindung eines Elements der Gruppe IIa umfaßt, der keramische Werkstoff eine Verbindung, die mindestens ein Element, ausgewählt aus Elementen der Gruppe IIa des Periodensystems der Elemente, enthält oder die Verbindung und andere keramische Verbindungen umfaßt.

2. Verwendung nach Anspruch 1, wobei der Anteil an Element der Gruppe IIa in dem keramischen Werkstoff mindestens 5 Gew.-% beträgt.

3. Verwendung nach Anspruch 2, wobei der Anteil an Element der Gruppe IIa in dem keramischen Werkstoff mindestens 20 Gew.-% beträgt.

4. Verwendung nach Anspruch 1, wobei die Vergiftung verhindernde Schicht auf dem Träger in einer Menge von 5 bis 200 g/l des Trägers gebildet wird.

5. Verwendung nach Anspruch 4, wobei die Vergiftung verhindernde Schicht auf dem Träger in einer Menge von 30 bis 150 g/l des Trägers gebildet wird.

6. Verwendung nach Anspruch 1, wobei die Menge der Verbindung eines Elements der Gruppe IIa in der Vergiftung verhindernden Schicht mindestens 5 Gew.-% beträgt.

7. Verwendung nach Anspruch 6, wobei die Menge an Verbindung eines Elements der Gruppe IIa in der Vergiftung verhindernden Schicht mindestens 10 Gew.-% beträgt.

8. Verwendung nach Anspruch 1, wobei der gegen Vergiftung beständige Teil sich von der Abgaseinlaßseitenkante über mindestens 1/10 der gesamten Länge der Abgaskonvertervorrichtung erstreckt.

9. Verwendung nach Anspruch 8, wobei der gegen Vergiftung beständige Teil sich von der Abgaseinlaßseitenkante über mindestens 1/5 der gesamten Länge der Abgaskonvertervorrichtung erstreckt.

**Revendications**

1. Utilisation d'un dispositif convertisseur de gaz d'échappement pour épurer des gaz d'échappement contenant du silicium et/ou du phosphore, ledit dispositif convertisseur de gaz d'échappement comprenant un matériau empêchant l'empoisonnement pour empêcher qu'un catalyseur soit empoisonné par le silicium et/ou le phosphore, placé à l'entrée du gaz d'échappement et un composite catalytique comprenant un support et un composant catalytique métal précieux déposé sur ledit support placé à la sortie du gaz d'échappement, ledit matériau empêchant l'empoisonnement étant soit un matériau céramique soit un matériau destiné à empêcher un catalyseur d'être empoisonné, ledit matériau comprenant un support et une couche empêchant l'empoisonnement déposée dessus, ladite couche comprenant un composé d'élément de groupe IIa, ledit matériau céramique comprenant un composé contenant au moins un élément choisi parmi les éléments du groupe IIa du tableau périodique ou comprenant ledit composé et d'autres composés céramiques.

2. Utilisation selon la revendication 1, où la teneur en élément de groupe IIa dans le matériau céramique est au moins 5 % en poids.

3. Utilisation selon la revendication 2, où la teneur en élément de groupe IIa dans le matériau céramique est au moins 20 % en poids.

4. Utilisation selon la revendication 1, où la couche empêchant l'empoisonnement est formée sur le support en une quantité de 5 à 200 g/l du support.

5. Utilisation selon la revendication 4, où la couche empêchant l'empoisonnement est formée sur le support en une quantité de 30 à 150 g/l du support.

6. Utilisation selon la revendication 1, où la quantité de composé d'élément du groupe IIa dans la couche empêchant l'empoisonnement est au moins 5 % en poids.

7. Utilisation selon la revendication 6, où la quantité de composé d'élément du groupe IIa dans la couche empêchant l'empoisonnement est au moins 10 % en poids.

8. Utilisation selon la revendication 1, où la partie résistant à l'empoisonnement s'étend depuis l'entrée du gaz d'échappement sur au moins $1/10^e$ de toute la longueur du dispositif convertisseur de gaz d'échappement.

9. Utilisation selon la revendication 8, où la partie résistant à l'empoisonnement s'étend depuis l'entrée du gaz d'échappement sur au moins $1/5^e$ de toute la longueur du dispositif convertisseur de gaz d'échappement.

F I G . 1

F I G . 2